# EUROPEAN PATENT APPLICATION

(11) **EP 2 665 290 A1**
(43) Date of publication of application: **20.11.2013**
(21) Application number: 13167532.4
(22) Date of filing: 13.05.2013
(51) Int. Cl.: H04N 21/4788, H04N 21/4223, H04N 21/431

(54) **Simultaneous display of a reference video and the corresponding video capturing the viewer/sportsperson in front of said video display**

(30) Priority: 14.05.2012 KR 20120051192
(71) Applicant: Samsung Electronics Co., Ltd, Gyeonggi-do 443-742 (KR)
(72) Inventor: Cho, Bong-hyun, Suwon-si, Gyeonggi-do (KR); Yoon, Soo-yeoun, Seocho-gu Seoul (KR); Choi, Jun-sik, Suwon-si Gyeonggi-do (KR)
(74) Representative: Venner Shipley LLP

(57) **Abstract**

A method for controlling a display apparatus is provided. The method for controlling a display apparatus according to an exemplary embodiment includes receiving a reference video and a first user video which is synchronizable with the reference video and displaying the received reference video and the first user video on divided screens respectively, and the first user video may be a video capturing a subject following an object included in the reference video or a video capturing the subject performing an action according to instructions displayed or performed in the reference video.

## Description

The present invention relates to a display apparatus, a server, and a controlling method thereof, and more particularly, to a display apparatus having a capturing function, a server, and a controlling method thereof.

In related art display apparatuses, a capturing service is limited to transmitting captured content from one apparatus to another in one direction. Specifically, the capturing function of a display apparatus is used for a service (mobile communications over internet or MoIP) of transmitting a captured image from one apparatus to another.

Accordingly, there is a need for a feedback service which provides content images displayed on a television screen through various input sources such as real time broadcasts and video on demand (VOD) in association with the captured images of a user.

An aspect of an exemplary embodiment of the present invention relates to a display apparatus which provides a feedback service by synchronizing or "interlocking" a reference video with a captured or "picked-up" video, a server, and a controlling method thereof.

A method for controlling a display apparatus, according to an exemplary embodiment, includes receiving a reference video and a first user video which is synchronizable with the reference video and displaying the received reference video and the first user video on divided screens, respectively, and the first user video is a video capturing a subject following an object included in the reference video or a video capturing the subject performing an action according to instructions displayed or performed in the reference video.

The method may further include generating a second user video which captures a second subject following an object included in the reference video or captures the second subject performing an action according to instructions displayed or performed in the reference video and displaying the generated second user video on one portion of a screen where the reference video and the first user video are displayed.

The method may further include transmitting the second user video to an external server, and the generating the second user video may include generating the second user video by adding metadata for synchronizing the reference video with the second user video.

The method may further include recognizing a voice of the second subject and converting the recognized voice into a text and synchronizing the converted text with the second user video and storing the synchronized video.

The metadata of the second user video may include at least one of identification information of the second user video and the reference video, a video running time, a starting point and a finishing point of a reference video, and a user script.

The reference video may be content provided from an external server or real time broadcast content.

If the reference video is the real time broadcast content, the first user video may be a video which is captured in an area of which a time zone is different from a time zone of the display apparatus.

A method for controlling a server, according to an exemplary embodiment, includes receiving a first user video which is synchronized with a reference video from a first display apparatus and upon a request from a second display apparatus, transmitting the first reference video and the first user video to the second display apparatus, and the first user video may be a video capturing a first subject following an object included in the reference video or a video capturing the subject performing an action according to instructions displayed or performed in the reference video.

The method may further include receiving a second user video which is synchronized with the reference video from the second display apparatus, and the second user video may be a video capturing a second subject following an object included in the reference video or a video capturing the second subject performing an action according to instructions displayed or performed in the reference video.

The first user video includes metadata for synchronization with the reference video, and the metadata may include at least one of identification information of the second user video and the reference video, a video running time, a starting point and a finishing point of the reference video, and a user script.

A display apparatus, according to an exemplary embodiment, includes a transceiver which receives a reference video and a first user video which is synchronizable with the reference video, a display, and a controller which controls the display to display the received reference video and the first user video on divided screens respectively, and the first user video is a video capturing a subject following an object included in the reference video or a video capturing the subject performing an action according to instructions displayed or performed in the reference video.

The apparatus may further include a video capturing device which captures a second subject following an object included in the reference video or captures the second subject performing an action according to instructions displayed or performed in the reference video, and the controller, if a second video capturing the second subject is generated, may control the display to display the generated second user video on one portion of a screen where the reference video and the first user video are displayed.

The controller may generate the second user video by adding metadata for synchronization with the reference video to the second user video and control the transceiver to transmit the generated second user video to the external server.

The apparatus may further include a voice recognizer which recognizes a voice of the subject, and the controller may convert the recognized voice into a text, synchronize the converted text with the second user video, and store the synchronized video.

The metadata of the first user video may include at least one of identification information of a user video and a reference video, a video running time, a starting point and a finishing point of a reference video, and a user script.

The reference video may be content provided from an external server or real time broadcast content.

If the reference video is the real time broadcast content, the first user video may be a video which is captured in an area of which a time zone is different from a time zone of the display.

A server, according to an exemplary embodiment, includes a transceiver which communicates with a first display apparatus and a second display apparatus, a storage unit which, if a first user video synchronized with a reference video is received from the first display apparatus through the transceiver, stores the received first user video, and a controller which, upon a request from the second display apparatus, controls the transceiver to transmit the reference video and the first user video to the second display apparatus, and the first user video is a video capturing a first subject following an object included in the reference video or a video capturing the subject performing an action according to instructions displayed or performed in the reference video.

The transceiver may further receive a second user video synchronized with the reference video from the second display apparatus, and the second user video may be a video capturing a second subject following an object included in the reference video or a video capturing the second subject performing an action according to instructions displayed or performed in the reference video.

The first user video may include metadata for synchronization with the reference video, and the metadata may include at least one of identification information of a user video and a reference video, a video running time, a starting point and a finishing point of a reference video, and a user script.

A method for controlling a display apparatus, according to an exemplary embodiment, includes displaying a received reference video on a screen, generating a user video capturing a subject following an object included in the reference video and storing the generated user video or a video capturing the subject performing an action according to instructions displayed or performed in the reference video, and displaying the stored user video and transmitting the stored user video to an external server.

The storing the user video may include storing the user video by adding metadata of the user video to the user video for synchronization with the reference video.

A display apparatus, according to another aspect of an exemplary embodiment, includes a display which displays a received reference video on a screen, a controller which controls to generate a user video capturing a subject following an object included in the reference video, and store and display the generated user video or a video capturing the subject performing an action according to instructions displayed or performed in the reference video, and a transceiver which transmits the stored user video to an external server.

The controller may control to store the user video by adding metadata of the user video to the user video for synchronization with the reference video.

These and/or other aspects and advantages of the exemplary embodiments will become apparent and more readily appreciated from the following description of the embodiments, taken in conjunction with the accompanying drawings, of which:
FIGS. 1A to 1C are views illustrating a configuration of a system according to aspects of various exemplary embodiments;
FIGS. 2A and 2B are block diagrams illustrating a configuration of a display apparatus according to an exemplary embodiment;
FIG. 3 is a block diagram illustrating a configuration of a server according to an exemplary embodiment;
FIGS. 4A to 4D are views illustrating a data form according to various exemplary embodiments;
FIG. 5 illustrates a detailed configuration of user image metadata according to an exemplary embodiment;
FIGS. 6A and 6B are views illustrating a display layout according to aspects of an exemplary embodiment;
FIGS. 7A and 7B are views illustrating a display layout according to other aspects of an exemplary embodiment;
FIGS. 8A to 8C are views illustrating a User Interface layout provided according to aspects of an exemplary embodiment;
FIG. 9 is a flowchart to explain a method for controlling a display apparatus according to an exemplary embodiment;
FIG. 10 is a flowchart to explain a method for controlling a display apparatus according to another aspect of an exemplary embodiment; and
FIG. 11 is a flowchart to explain a method for controlling a server according to another aspect of an exemplary embodiment.

Hereinafter, a method of configuring, manufacturing and using the exemplary embodiments will be explained in detail. It should be noted that various exemplary embodiments described herein do not limit the invention as recited in the claims.

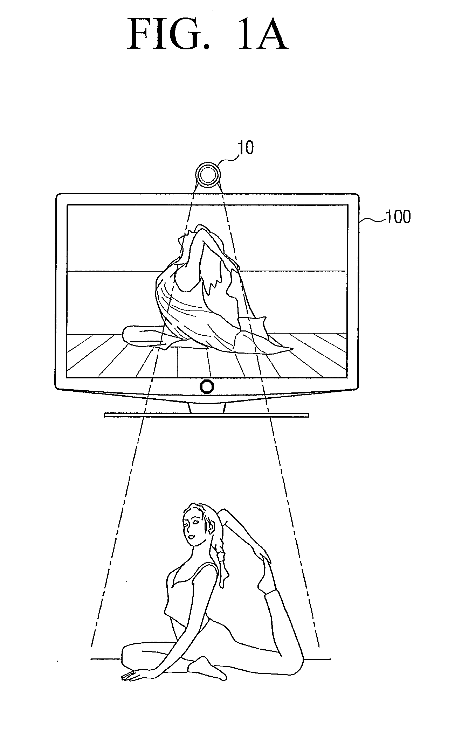

FIGS. 1A to 1C are views illustrating a configuration of a system according to various exemplary embodiments.

FIG. 1A is a view illustrating a configuration of a system according to an exemplary embodiment. According to FIG. 1A, a display system may comprise a display apparatus 100 and an imaging apparatus 10.

The display apparatus 100 may be implemented as a digital television, but in some cases, may be implemented as any apparatus which has a displaying function, such as a PC, a mobile communication terminal, a personal digital assistant (PDA), a smart phone, a digital multimedia broadcasting (DMB) phone, an MP3 player, a mobile television, a digital camera, etc.

The imaging apparatus 10 may be implemented as a general camera capable of capturing a subject image (e.g., subject video), and may capture operations of a subject. In some cases, the imaging apparatus 10 may be configured to comprise at least one of a depth camera and a color camera which can capture a user motion to control the display apparatus 100. Herein, the depth camera may detect 3D location information, that is, depth information using a sensor, and the color camera (for example, a 2D camera) may recognize 2D location information, shape, etc. Meanwhile, the depth camera may be used to compensate an image screen or video in accordance with the distance from the camera, and the compensation may include enlargement/reduction of a screen, adjustment of resolution, etc.

In another aspect of an exemplary embodiment, the imaging apparatus 10 is a separate component (an external camera) from the display apparatus 100, but this is only an example. The imaging apparatus 10 may be provided inside of the display apparatus 100 (as a built-in camera).

Hereinafter, it will be assumed that the imaging apparatus 10 is provided separately from the display apparatus 100 for convenience of explanation.

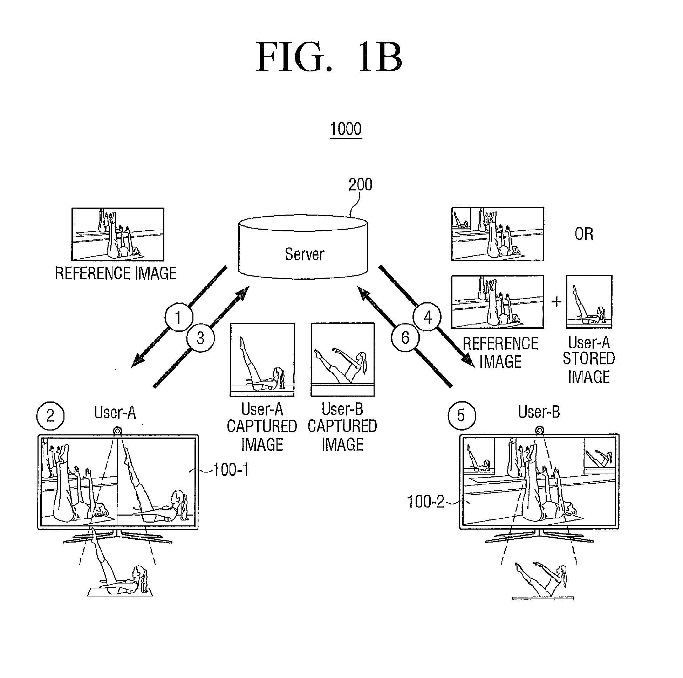

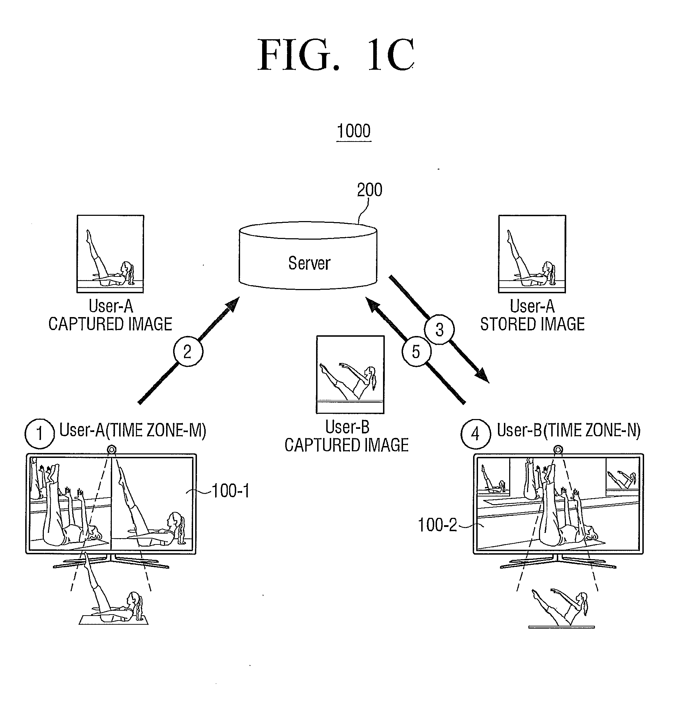

FIGS. 1B and 1C are views to explain operations of a content providing system schematically according to various exemplary embodiments.

According to FIGS. 1B and 1C, a content providing system 1000 comprises a first display system and a second display system (100-1, 100-2) and a server 200.

FIG. 1B illustrates an example in which content is received from a server as a reference image (e.g., a reference video). According to FIG. 1B, the first display apparatus 100-1 may receive reference image content from the server 200 and display the received reference image on one of divided screens. For example, the first display apparatus 100-1 may receive pre-produced content such as video on demand (VOD) content from the server 200.

In addition, the first display apparatus 100-1 may display an image of user A which is captured while a reference image is being displayed on another screen from among divided screens. For example, an image showing user A following operations of an object included in a reference image while a reference image is being displayed may be displayed on another screen from among divided screens.

The first display apparatus 100-1 may transmit a captured image (e.g., captured video) to the server 200, and the server 200 may store the received image (e.g., a received video). For example, the server 200 may synchronize a user image (e.g., a user video) received from the first display apparatus 100-1 with a pre-stored reference image and store the synchronized user image. If there is a request from the second display apparatus 200-2, the server 200 may transmit a reference image, or a captured image of the user A which is synchronized with the reference image which is then stored, to the second display apparatus 200-2. In this case, the second display apparatus 200-2 may display not only the reference image and a captured image of a corresponding user B but also an image of another user A corresponding to the reference image.

FIG. 1C illustrates an example in which broadcast content are received from a broadcasting station as a reference image.

According to FIG. 1C, the first display apparatus 100-1 may receive real-time broadcast content as a reference image and display the received reference image on one of the divided screens. The display apparatus 100-1 may display an image of a user A which is captured while a reference image is being displayed on another screen from among divided screens. Further, the display apparatus 100-1 may transmit a captured image to the server 200, and the server 200 may store the received image.

In addition, if there is a request from the second display apparatus 200-2, the server 200 may transmit a captured image of the user A to the second display apparatus 200-2. In this case, the second display apparatus 200-2 may display not only the reference image and a captured image of a corresponding user B which are broadcast on a real-time basis but also an image of another user A corresponding to the reference image.

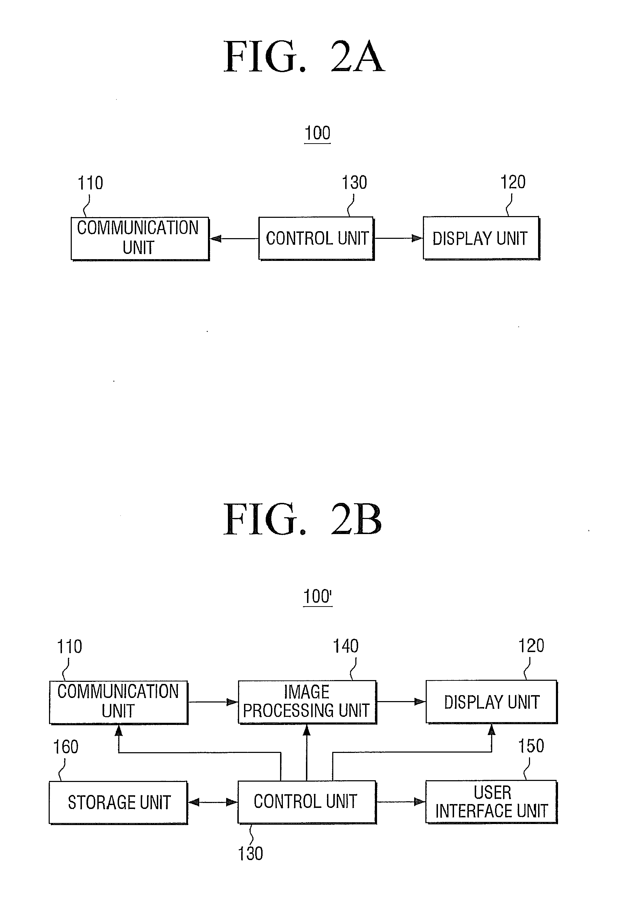

FIGS. 2A and 2B are block diagrams to explain configuration of a display apparatus according to an exemplary embodiment.

According to FIG. 2A, the display apparatus 100 comprises a communication unit 110 (e.g., a transceiver), a display unit 120 (e.g., a display), and a control unit 130 (e.g., a controller).

The communication unit 110 performs communication with the server 100. Specifically, the communication unit 110 may receive a reference image from the server 200 and transmit a user image which is generated in relation with the received reference image to the server 200. Herein, the reference image may be pre-produced content or an image capturing a subject while a reference image is being displayed. For example, the user image may be an image which captures operations of a subject following operations of an object included in the reference image. More specifically, if a user watches a yoga image provided through the display apparatus 100 and makes a posture imitating the yoga posture of the instructor in the image, the image capturing the posture of the user may be the user image.

Hereinafter, the above-explained image will be referred to simply as "a user image" without further description.

Meanwhile, the reference image may be real-time broadcast content and in this case, the reference image may be received through a tuner, etc. For example, if a broadcast program for following yoga postures is transmitted live on television, the corresponding broadcasting image may be the reference image.

The display unit 120 displays at least one of a reference image and a user image on the screen. The display unit 120 may be implemented using a Liquid Crystal Display Panel, a Plasma Display Panel, a Vacuum Fluorescent Display, a Field Emission Display, an Electro Luminescence Display, etc.

The display unit 120 may display a received reference image on the screen. Herein, the reference image may be an image provided from a server or a broadcasting station as described above. In addition, the display unit 120 may display a user image which captures an image of a subject while a reference image is being displayed along with the user image. For example, the display unit 120 may display a reference image and a user image on a divided screen. In this case, the user image may be at least one of an image including a subject and a background, an image where the background of a subject is deleted, and an image where only the silhouette of a subject is displayed. Alternatively, the image capturing a subject may be an image in which an image without a background is combined with a silhouette image.

In this case, the screen may be divided in accordance with a user command or a user motion, or a motion of a remote controller being controlled by a user (not shown). For example, if a direction of user motion is recognized, the screen may be divided into a plurality of screens in accordance with the direction of the user motion. That is, if the user motion is an up and down motion, the screen may be divided into a left screen and a right screen, and if the user motion is a left and right, or "lateral" motion, the screen may be divided into an upper screen and a lower screen. Herein, the user motion may be moving an arm up and down or right and left while the fist is being opened up or closed. However, the user motion is not limited thereto, and any type of user motion having directivity such as the motion of moving the head of a user up and down or right and left or the motion of moving the legs of a user up and down or right and left may also be the user motion.

In addition, the display unit 120 may display a user image on a picture in picture (PIP) screen at a preset or movable display location.

The control unit 130 controls overall operations of the display apparatus 100.

The control unit 130 controls operations of the above-described communication unit 110 and the display unit 120. If a user image is generated through a capturing operation, the control unit 130 generates metadata regarding the user image to synchronize a reference image with the user image and adds and stores the metadata in the user image.

For example, the metadata regarding the user image may include at least one of identification information regarding the user image and a reference image, an image running time, the starting time and the finishing time of the reference image, and a user script.

The metadata regarding the reference image may have different values according to the type of the reference image. For example, if the reference image is pre-produced content, the metadata regarding the reference image may include information regarding at least one of a reference image ID, an image running time, and the starting time and the finishing time of the reference image. Alternatively, if the reference image is real-time broadcast content, the metadata regarding the reference image may include information regarding at least one of a reference image ID, the broadcasting time of the real-time broadcast content, and the starting time and the finishing time of the broadcast content.

If a user image corresponding to a reference image is generated, the control unit 130 may modify the metadata of the reference image. For example, a generated user image ID may be added to the metadata of the reference image. In this case, the control unit 130 may modify the metadata of the reference image. For example, the metadata of the reference image may be modified to include identification information of the user image.

In addition, the display apparatus 100 may further include a voice recognition unit (not shown). The voice recognition unit may comprise a microphone and an audio processor which analyzes the user's voice received through the microphone. In this case, the control unit 130 may convert a voice of a subject recognized through a voice recognition unit (not shown) into text, synchronize the converted text with a user image, and store the synchronized text. Specifically, the control unit 130 recognizes a voice using a voice recognition module and voice database. The voice recognition may be divided into isolated word recognition where each uttered word is separately recognized, continuous speech recognition where continuous word, continuous sentence, and conversational voice are recognized, and keyword spotting which is in between the isolated word recognition and the continuous speech recognition and detects and recognizes a predetermined keyword. If a user voice is input, the control unit 130 determines a voice section by detecting the starting point and the finishing point of a voice uttered by a user within the input voice signal. The control unit 130 may calculate the energy of the input voice signal, classify the energy level of the voice signal according to the calculated energy, and detect a voice section using dynamic programming. The control unit 130 generates phoneme data by detecting a phoneme which is the smallest unit of a voice, based on an acoustic model, in the voice signal within the detected voice section. The control unit 130 generates text information by applying a Hidden Markov Model (HMM) to the generated phoneme data. However, the above method of recognizing a user voice is only an exemplary embodiment as described above, and a user voice can be recognized using other methods.

In addition, the control unit 130 may receive a reference image and a user image which is synchronized with the reference image. The control unit 130 may control the display unit 120 to display the received reference image and user image on respective portions of a divided screen.

In this case, if a user's motion having directivity is recognized, the control unit 130 may divide a screen in accordance with the direction of the user motion. In one example of recognizing a user's motion, the control unit 130 may separate an area having a motion from its background by using a motion recognition module to recognize a continuous motion. If a user's motion is input, the control unit 130 stores the received image by frame unit and senses an object (for example, a hand of a user, etc.), that is, a subject of a user's motion. The control unit 130 detects an object by sensing at least one of a shape, a color, and a motion of the object included in a frame. The control unit 140 may trace the motion of the detected object using the location of each object included in a plurality of frames.

In addition, the control unit 130 may control the display unit to display not only the received reference image and the user image but also the user image generated by the display apparatus 100.

If the reference image is real-time broadcast content, the user image which is received along with the reference image may be an image which is captured in an area with a different time zone than that of the display apparatus 100. For example, the user image which is received with the reference image may be an image which is captured in an area with an earlier time zone than that of the area where the display apparatus 100 is located. For example, in the United States where the time zone is earlier than that of Korea, the broadcast contents which are broadcast in the U.S. on the same date and time may be broadcast later in Korea. Therefore, a user image capturing a user residing in the U.S. may be provided with the same reference image from a time when the corresponding reference image is broadcast in Korea.

An example scenario where an exemplary embodiment may be applied is a scenario where a user enters into a learning mode to learn the motions of an object of content while watching the specific content. If a screen is divided into more than three screens, the control unit 130 may display a reference image on the first screen which is one of the divided screens and display a user image capturing different subjects on the other screens. Accordingly, using the example of the above scenario, a plurality of users may use the learning mode to learn motions together. In addition, if a screen is divided into more than three screens, the control unit 130 may display a reference image on the first screen which is one of the divided screens and display a user image capturing different users in different time zones on the other screens. Accordingly, in the example of the above scenario, a plurality of users may use the learning mode to learn motions together.

FIG 2B is a block diagram illustrating a detailed configuration of a display apparatus.

According to FIG. 2B, a display apparatus 100' comprises the communication unit 110, the display unit 120, the control unit 130, an image processing unit 140 (e.g., an image processor), a user interface unit 150 (e.g., a user interface), and a storage unit 160 (e.g., storage or memory). From among the above components, the components which are illustrated in FIG. 2A will not be described further with respect to FIG. 2B.

The image processing unit 140 processes an image received through the communication unit 110, tuner, etc. Specifically, the image processing unit 140 performs operations such as signal processing including video decoding, format analysis and adding a Graphic User Interface (GUI).

The user interface unit 150 receives a user command. Specifically, the user interface unit 150 may receive a user command through a remote controller (not shown) or a user command according to a user's motion input from an external camera (not shown). Herein, the user motion may be a motion having directivity such as left, right, up, or down.

Alternatively, the user interface unit 150 may be realized as an internal camera (not shown) which is formed inside of the display apparatus 100. Herein, the external camera (not shown) or the internal camera (not shown) may be realized as one of a depth camera and a color camera. That is, the external camera (not shown) or the internal camera (not shown) may be realized as a depth camera, a color camera, or a camera where a depth camera and a color camera are combined.

The storage unit 160 stores a user image generated with respect to a received reference image. In addition, the storage unit 160 may store a text file which is generated by converting the above-mentioned user voice and such a text file may be synchronized with the user image and then stored. Alternatively, a text file may not be configured as a separate file and instead, it may be incorporated into the user image and stored.

Further, the storage unit 160 may store a user command corresponding to the predetermined motion. Herein, the storage unit 160 may have a predetermined storage capacity and may store an image captured by an internal or external camera (not shown) in a recording medium. In this case, the recording medium may be a magnetic recording medium such as a Hard Disk Drive (HDD), a semiconductor recording medium such as a memory card and a flash memory, and an optical recording medium such as a Digital Versatile Disk (DVD).

The storage unit 160 may also reproduce a captured image stored in a recording medium. In this case, the storage unit 160 may include a circular buffer area which provides a time shift function, and the control unit 130 may provide the time shift function by controlling each functioning unit.

Herein, the time shift function refers to the function of reproducing an image captured prior to the current point of time so as to allow a user to watch an image captured prior to the current point of time.

A time shift function may be provided by recording and securing a certain amount of images for a predetermined time period. For example, if the time shift function is used, the currently-captured image may be stored in a hard disk as digital information automatically while simultaneously being displayed on the screen. Accordingly, if a "stop" button is pressed and a "play" button is pressed, the stored image may be reproduced from the point where it is stopped. In addition, the currently-captured image may be viewed again or reproduced slowly, and a certain portion may be skipped to find and reproduce a desired portion.

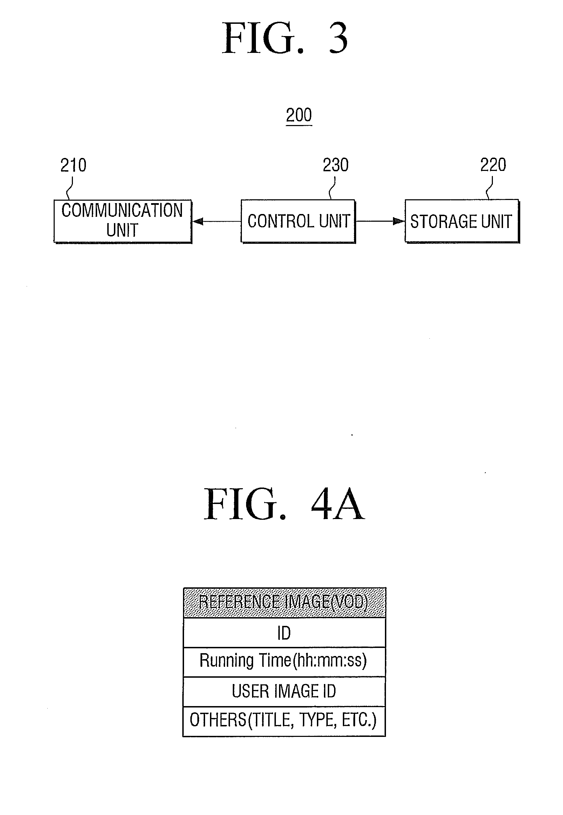

FIG. 3 is a block diagram illustrating configuration of a server according to an exemplary embodiment. According to FIG. 3, the server 200 comprises a communication unit 210 (e.g., a transceiver), a storage unit 220 (e.g., a storage or memory), and a control unit 230 (e.g., a controller).

The communication unit 210 receives a user image which captures the image of a subject while a reference image is being displayed from the display apparatus 100 and 100'. In addition, the communication unit 210 may transmit the received user image to another display apparatus (not shown). The communication unit 210 may also transmit a pre-produced reference image to the display apparatus 100 and 100'.

The storage unit 220 stores at least one of the pre-produced image and the user image received from the display apparatus 100 and 100'. Herein, the user image may be an image which is synchronized with the reference image through metadata.

The control unit 230 controls overall operations of the server 200. In particular, the control unit 230 may control the communication unit 210 to provide at least one of the reference image stored in the storage unit 220 and the user image to an external display apparatus (not shown).

Specifically, the control unit 230 may provide the reference image stored in the storage unit 220 and the user image synchronized with the reference image together in response to a request from an external display apparatus (not shown).

However, if a reference image is real-time broadcast content, a recording image of the broadcast content is provided as the reference image and a user image which is synchronized with the reference image may be provided. In this case, the reference image may be stored in a personal video recorder (PVR) or in a separate server (not shown).

FIGS. 4A to 4D are views that illustrate a data form according to various exemplary embodiments.

FIG. 4A is a view illustrating a metadata form of a reference image according to an exemplary embodiment. As illustrated in FIG. 4A, if the reference image is pre-produced content such as VOD content, the metadata of the reference image may include the identification (ID) of the reference image, the running time, the ID of the user image and other information. Herein, the other information may be the title or type of the reference image. However, the ID of the user may not be included in some cases.

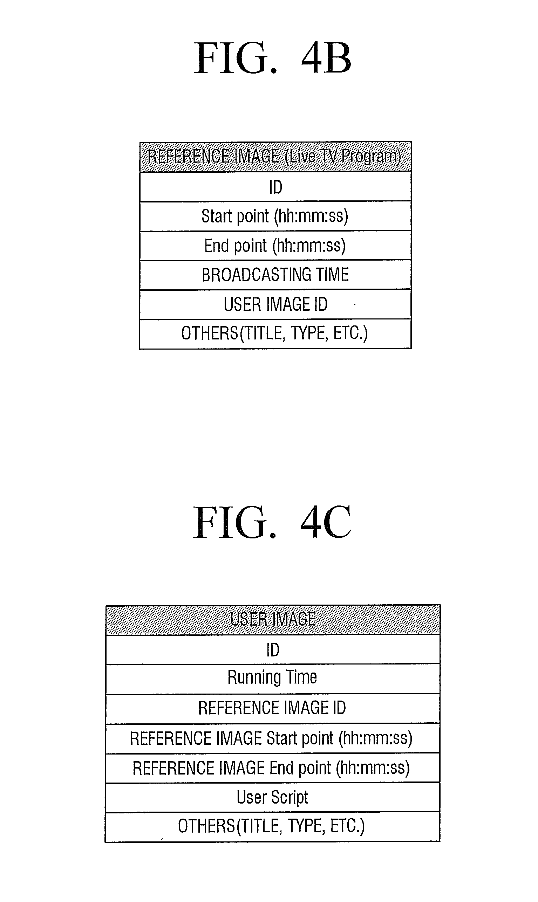

FIG. 4B is a view illustrating a metadata form of a reference image according to another exemplary embodiment. As illustrated in FIG. 4B, if the reference image is real-time broadcast content, the metadata of the reference image may include the ID of the reference image, the starting time and the finishing time of the broadcast content, the broadcasting time, the ID of the user image and other information. Herein, the broadcasting time means a standard time and may be in a particular time zone such as EST or PST. The starting time and the finishing time of the reference image may be the starting time and the finishing time of a broadcast in the time period of an area where the corresponding broadcast is transmitted. However, the ID of the user image may not be included in some cases.

FIG. 4C is a view illustrating a metadata form of a user image according to an exemplary embodiment. As illustrated in FIG. 4C, the metadata of a user image may include the ID of the user image, the running time, the ID of the reference image, the starting time and the finishing time of the reference image, a user script and other information. Herein, the other information may be the title and the type of the user image. The starting time and the finishing time of the reference image may include a value indicating where the recording of a user image is located in the reference image.

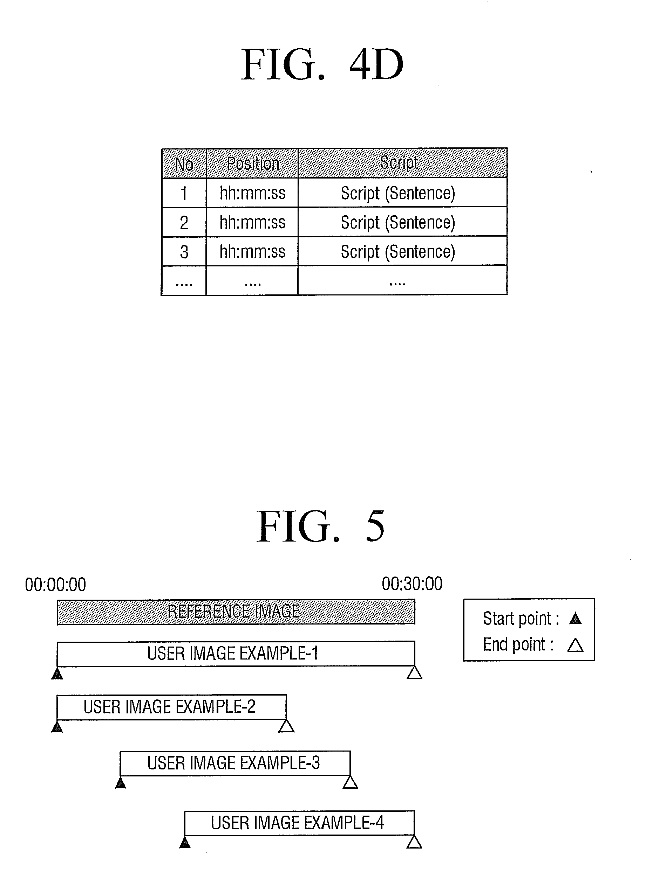

FIG. 4D is a view to illustrating a form of a user script portion according to an exemplary embodiment. As illustrated in FIG. 4D, the user script may include the reproduction location of the user image and the corresponding script information.

FIG. 5 is a view illustrating a detailed configuration of user image metadata according to an exemplary embodiment. As illustrated in FIG. 5, the starting point and the finishing point of the user image may be the starting point and the finishing point of recording the user image.

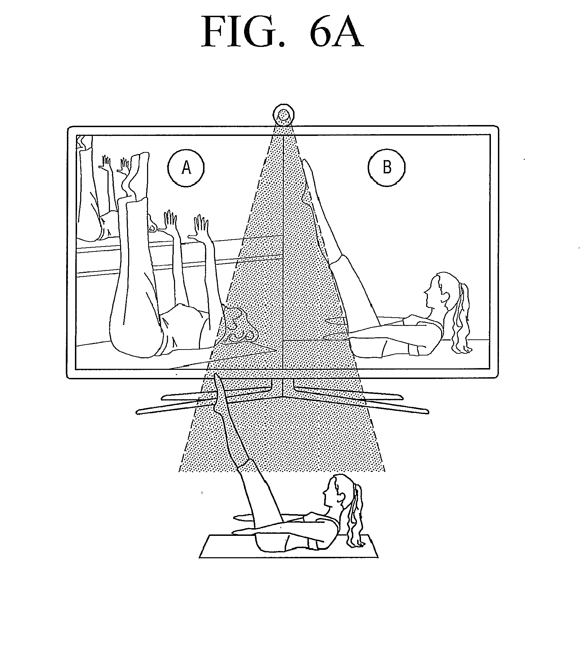

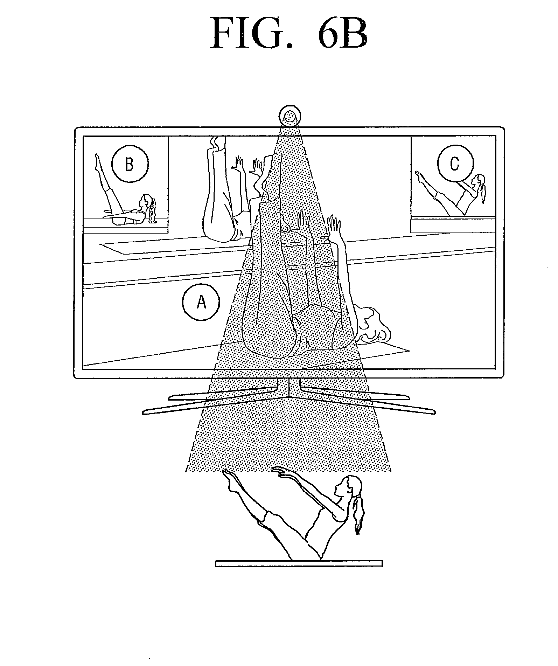

FIGS. 6A and 6B are views illustrating a displaying form according to an exemplary embodiment. FIG. 6A illustrates an example in which a reference image (A) and a user image (B) capturing a user in front of a television are displayed on divided screens according to an exemplary embodiment. FIG. 6B illustrates an example in which the reference image (A), the user image (B) capturing a user in front of a television, and an image (C) capturing another user following the reference image (A) are displayed on divided screens according to another exemplary embodiment. Herein, the other user image (C) may be transmitted from the server 200.

As illustrated in FIGS. 6A and 6B, a reference image and a user image may be displayed on divided screens in various forms, such as PIP or PIG. In this case, the location or size of an image may be adjusted using a remote controller or a user motion.

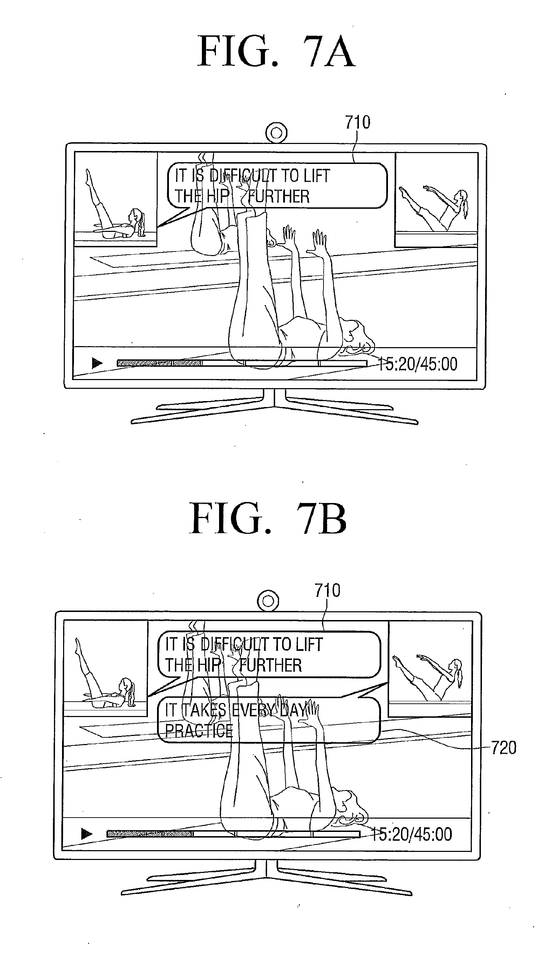

FIGS. 7A and 7B are views illustrating a displaying form according to another exemplary embodiment. FIGS. 7A and 7B illustrate examples in which a user's voice command is converted into text using voice recognition technology and the text is provided together with user image according to an exemplary embodiment.

As illustrated in FIG. 7A, another user image may be provided along with the user's voice command in the form of script 710, and this is possible as the voice command converted to a text form is stored together with a user image using voice recognition technology. In this case, as illustrated in the figure, the portion which is provided with a script in the other user image may be displayed with a specific identification mark in the play bar of the image.

In addition, as illustrated in FIG. 7B, the voice command 720 of a current user may be provided in the form of a script at the corresponding time using voice recognition technology.

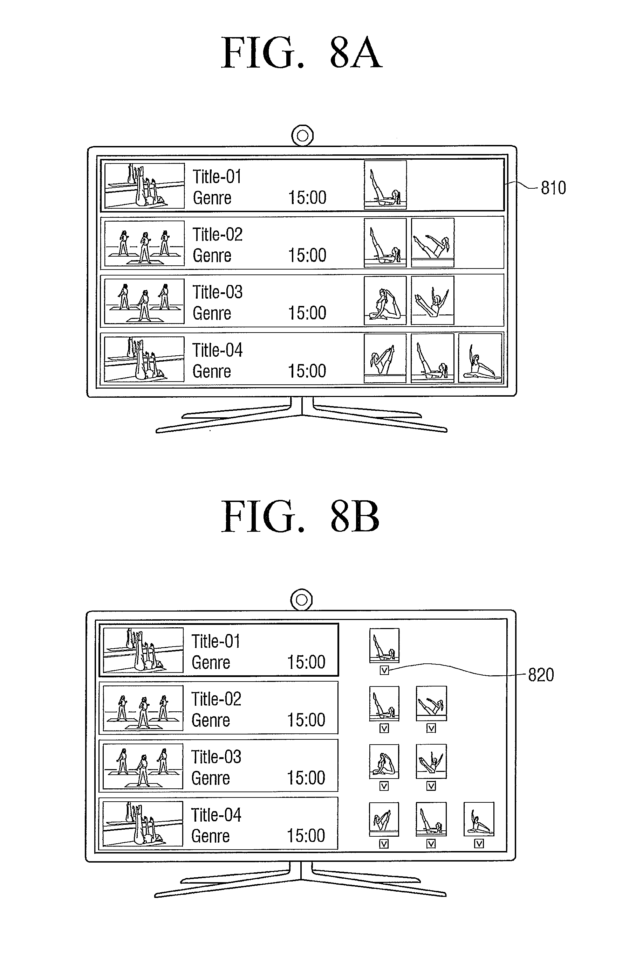

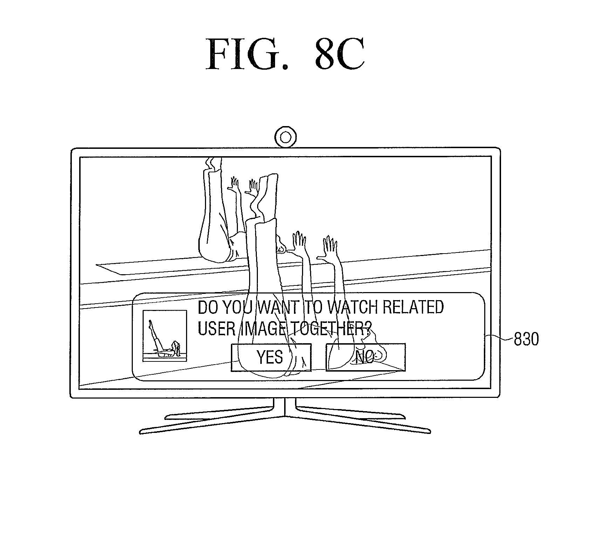

FIGS. 8A to 8C are views illustrating a UI form provided according to an exemplary embodiment. As illustrated in FIG. 8A, if there is a user image which can be provided with a reference image, the thumbnail images and relevant information regarding the reference image and the user image may be listed and displayed on the screen. In this case, as illustrated in FIG. 8B, an option 820 is provided so that a user may select a desired reference image and another user image on the provided list. In addition, as illustrated in 8C, if a reference image is real time broadcast content and the corresponding content are mapped with another related user image, an alarm message 830 informing a user of the corresponding information may be displayed on the screen. This is the case in which the time zone of the area where the other user resides is later than the area where the current user resides.

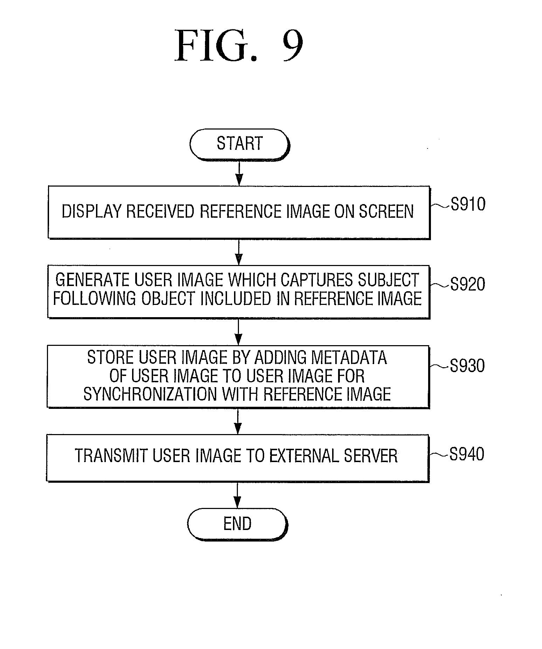

FIG. 9 is a flowchart to explain a method for controlling a display apparatus according to an exemplary embodiment.

According to the method for controlling a display apparatus illustrated in FIG. 9, first, a received reference image is displayed on the screen (S910) . Herein, the reference image may be pre-produced content or real time broadcast content. Next, a user image, which captures a subject following an object included in the displayed reference image or performing an action according to instructions displayed or performed in the reference image, is generated and stored (S920).

Metadata regarding the user image is generated and added to the user image so that the stored user image may be synchronized with the reference image (S930). Herein, the metadata regarding the user image may include at least one of identification information regarding the user image and the reference image, an image running time, the starting time and the finishing time of the reference image, and a user script.

Subsequently, the user image where the generated metadata is added is transmitted to an external server (S940). In addition, the generated user image may be displayed along with the reference image. Further, the voice of a subject may be recognized, the recognized voice may be converted into a text, and the converted text may be synchronized with the user image and stored.

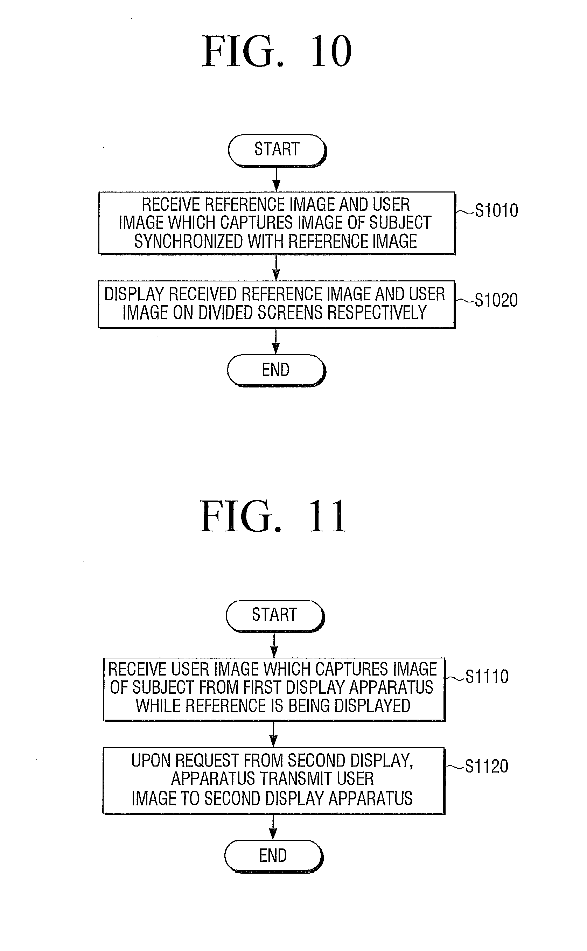

FIG. 10 is a flowchart to explain a method for controlling a display apparatus according to another exemplary embodiment.

According to the method for controlling a display apparatus illustrated in FIG. 10, a reference image and a user image which captures a subject following an object included in the synchronized reference image are received (S1010). Herein, the reference image may be pre-produced content or real time broadcast content.

Subsequently, the received reference image and user image may be displayed on divided screens respectively (S1020). In addition, if the reference image is real time broadcast content, the user image may be an image which is captured in an area having a different time zone than a display time zone.

FIG. 11 is a flowchart to explain a method for controlling a server according to an exemplary embodiment.

According to the method for controlling a server illustrated in FIG. 11, a user image which captures a subject following an object included in a reference image is received while the reference image is displayed on the first display apparatus (S1110).

Subsequently, the user image is transmitted to the second display apparatus in response to a request from the second display apparatus (S1120). In addition, if the reference image is content which are pre-produced and stored, the server may transmit the reference image to the first display apparatus, and may also provide to the second display apparatus not only the user image but also the reference image.

Herein, the user image may include metadata to be synchronized with the reference image. In this case, the metadata regarding the user image may include at least one of identification information regarding the user image and the reference image, an image running time, the starting time and the finishing time of the reference image, and a user script.

As described above, a user may easily compare a reference image with a user image by synchronizing the user image with the reference image and storing the synchronized image, and share such a user image with other users (such as, friends). Accordingly, the user may have experience of working out or watching television together with other users. In particular, the user may feel like watching real time broadcast content together with other users who live in other areas with different time zones.

Therefore, a user may enter into a learning mode to help/learn to make right posture with respect to any content he or she wishes while watching the content only with a camera attached to the television without purchasing any high-priced content or equipment.

While not restricted thereto, an exemplary embodiment can be embodied as computer-readable code on a computer-readable recording medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in a distributed fashion. Also, an exemplary embodiment may be written as a computer program and implemented in general-use or special-purpose digital computers that execute the programs.

Although a few exemplary embodiments have been shown and described, it would be appreciated by those skilled in the art that changes may be made without departing from the invention, the scope of which is defined in the claims.

## Claims

1. A method for controlling a display apparatus, comprising:
receiving a reference video and a first user video which is synchronizable with the reference video; and
displaying the received reference video and the first user video on divided screens respectively;
wherein the first user video is a video capturing a first subject following an object included in the reference video or a video capturing the first subject performing an action according to instructions displayed or performed in the reference video.

2. The method as claimed in claim 1, further comprising:
generating a second user video which captures a second subject following the object included in the reference video or captures the second subject performing an action according to instructions displayed or performed in the reference video; and
displaying the generated second user video on one portion of a screen where the reference video and the first user video are displayed.

3. The method as claimed in claim 2, further comprising:
recognizing a voice of the second subject and converting the recognized voice into text; and
synchronizing the converted text with the second user video and storing the synchronized video.

4. The method as claimed in claim 2 or claim 3, further comprising:
transmitting the second user video to an external server,
wherein the generating the second user video comprises generating the second user video by adding metadata for synchronizing the reference video with the second user video.

5. The method as claimed in claim 4, wherein the metadata of the second user video includes at least one of identification information of the second user video and the reference video, a video running time, a starting point and a finishing point of the reference video, and a user script.

6. The method as claimed in any one of claims 1 to 5, wherein the reference video is content provided from an external server or real time broadcast content.

7. The method as claimed in claim 6, wherein if the reference video is the real time broadcast content, the first user video is a video which is captured in an area in which a time zone is different from a time zone in which the display apparatus is located.

8. A method for controlling a server, comprising:
receiving a first user video which is synchronized with a reference video from a first display apparatus; and
upon a request from a second display apparatus, transmitting the first reference video and the first user video to the second display apparatus;
wherein the first user video is a video capturing a first subject following an object included in the reference video or a video capturing the subject performing an action according to instructions displayed or performed in the reference video.

9. The method as claimed in claim 8, further comprising:
receiving a second user video which is synchronized with the reference video from the second display apparatus,
wherein the second user video is a video capturing a second subject following an object included in the reference video or a video capturing the second subject performing an action according to instructions displayed or performed in the reference video.

10. The method as claimed in claim 8 or 9, wherein the first user video includes metadata for synchronization with the reference video,
wherein the metadata includes at least one of identification information of the second user video and the reference video, a video running time, a starting point and a finishing point of the reference video, and a user script.

11. A display apparatus, comprising:
a transceiver which receives a reference video and a first user video which is synchronizable with the reference video;
a display; and
a controller which controls the display to display the received reference video and the first user video on divided screens respectively,
wherein the first user video is a video capturing a subject following an object included in the reference video or a video capturing the subject performing an action according to instructions displayed or performed in the reference video.

12. The apparatus as claimed in claim 11, further comprising:
a video capturing device which captures a second subject following an object included in the reference video or captures the second subject performing an action according to instructions displayed or performed in the reference video,
wherein the controller, if a second video capturing the second subject is generated, controls the display to display the generated second user video on one portion of a screen where the reference video and the first user video are displayed.

13. The apparatus as claimed in claim 11 or 12, wherein the controller generates the second user video by adding metadata for synchronization with the reference video to the second user video and controls the transceiver to transmit the generated second user video to the external server.

14. The apparatus as claimed in claim 12, further comprising:
a voice recognizer which recognizes a voice of the subject,
wherein the controller converts the recognized voice into text, synchronizes the converted text with the second user video, and stores the synchronized video.

15. A server, comprising:
a transceiver which communicates with a first display apparatus and a second display apparatus;
a storage which, if a first user video synchronized with a reference video is received from the first display apparatus through the transceiver, stores the received first user video; and
a controller which, upon a request from the second display apparatus, controls the transceiver to transmit the reference video and the first user video to the second display apparatus,
wherein the first user video is a video capturing a first subject following an object included in the reference video or a video capturing the subject performing an action according to instructions displayed or performed in the reference video.
